# EUROPÄISCHE PATENTSCHRIFT

(11) **EP 2 104 464 B1**
(45) Veröffentlichungstag und Bekanntmachung des Hinweises auf die Patenterteilung: **13.02.2013**
(21) Anmeldenummer: 07856729.4
(22) Anmeldetag: 14.12.2007
(51) Int. Cl.: A61C 13/08

(54) **VERFAHREN ZUR REKONSTRUKTION VON ZÄHNEN**
METHOD FOR THE RECONSTRUCTION OF TEETH
PROCÉDÉ DE RECONSTRUCTION DE DENTS

(30) Priorität: 21.12.2006 DE 102006060682
(43) Veröffentlichungstag der Anmeldung: 30.09.2009
(73) Patentinhaber: Wiedmann, Manfred, 89555 Steinheim (DE)
(72) Erfinder: Wiedmann, Manfred, 89555 Steinheim (DE)
(74) Vertreter: Lorenz, Werner
(86) Internationale Anmeldenummer: PCT/EP2007/010988
(87) Internationale Veröffentlichungsnummer: WO 2008/077508

(56) Entgegenhaltungen:
- EP-A- 1 563 804
- CA-A1- 2 100 009
- US-A- 1 378 527
- US-A- 1 378 745
- US-A- 1 469 893
- US-A- 2 535 163
- US-A- 2 752 689
- US-A- 3 049 804
- ZMK, October 2010 (2010-10), ISSN: 1862-0914
- MANGRED WIEDMANN: "Zahnrekonstruktionssystem", DENTAL DIALOGUE DAS INTERNATIONALE JOURNAL FÜR DIE ZAHNTECHNIK, 2009,

## Beschreibung

Die Erfindung betrifft ein Verfahren zur Rekonstruktion fehlender, zerstörter und/oder abradierter Zähne.

Der Ersatz natürlicher Zähne durch Herstellung künstlicher Zähne aus den Vorlagen von natürlichen Zähnen und deren Einsatz in ein Gebiss stellt normalerweise kein Problem dar.

Problematisch ist jedoch die Rekonstruktion von fehlenden, zerstörten und/oder abradierten Zähnen, d. h. von Zähnen, für die der Originalzahn nicht mehr oder nicht mehr vollständig zur Verfügung steht. Wenn nicht "zufällig" ein Foto des Patienten mit einem Foto des Gesichts vorhanden war, in welchem, z. B. durch ein Lächeln, die Zähne sichtbar waren, konnten künstliche Zähne bezüglich ihrer Form und Größe lediglich aufgrund von Schätzungen und des vorhandenen Platzes im Mund eingesetzt werden.

Dabei entstand auch die Gefahr, dass das Aussehen des Patienten verändert wurde, insbesondere wenn mehrere Zähne des Oberkiefers oder sogar der gesamte Oberkiefer ersetzt werden musste.

Die EP 1 563 804 A2 bezieht sich auf eine Rekonstruktion von Zähnen, wobei aus einem Formselektor vorgefertigte Fabrikzähne so zusammengestellt werden, dass diese entsprechend beim Patienten eingesetzt werden.

Aus der US 3,049,804 ist es bekannt, bildliche Aufnahmen des Gesichtes eines Patienten zu Analysezwecken für eine Rekonstruktion von Zähnen anzufertigen.

Der vorliegenden Erfindung liegt daher die Aufgabe zugrunde, ein Verfahren zu schaffen, durch das auch bei fehlenden, zerstörten und/oder abradierten Zähnen Ersatzzähne hergestellt werden können, die in ihrer Form und Größe so weit wie möglich den natürlichen Zähnen entsprechen.

Erfindungsgemäß wird diese Aufgabe durch ein Verfahren gemäß Anspruch 1 gelöst.

Der Erfinder hat in langwierigen und aufwändigen Versuchsreihen herausgefunden, dass sich Formen und Größen der Zähne aus bestimmten Merkmalen, Formen und Maßen des Gesichtes des Patienten entnehmen lassen. Dies gilt auch dann, wenn die Zähne des Patienten bereits fehlen oder (teil)zerstört sind. Diese Erkenntnis wurde vom Erfinder planmäßig zur Rekonstruktion der natürlichen Zähne verwendet. Hierzu wurde vom Patienten eine bildliche Aufnahme, z. B. eine fotografische Abbildung, des Gesichtes in einer Frontalaufnahme gemacht. Anhand des erstellten Fotos wurde das Gesicht des Patienten vermessen, wonach anschließend die erhaltenen Werte in einem entsprechenden Verhältnis auf die Zahngrößen und Zahnformen geschlossen werden konnte.

Um der Realität sehr nahezukommen wird bei dem erfindungsgemäßen Verfahren zur Rekonstruktion des Abstandes der Spitzen der beiden Eckzähne des Patienten voneinander die Originalbreite der Nasenbasis ermittelt, wobei der ermittelte Wert entsprechend proportional für die Ermittlung der Breiten der anderen Zähne proportional vorgesehen wird.

Mit dieser Erkenntnis lassen sich dann die sechs wichtigsten Zähne eines Gebisses, nämlich die beiden Frontzähne, die beiden seitlichen Schneidezähne und die beiden Eckzähne bezüglich ihrer jeweiligen Breite entsprechend den Originalzähnen bestimmen.

Aus weiteren Merkmalen des Gesichts, wie z. B. der Umriss des Gesichts zur Herstellung des mittleren Frontzahnes, das Breitenverhältnis von Nasenbasis und Nasenwurzel, die Winkellinien des unteren Endes der Nase und der Nasenflügel für den zweiten Schneidezahn und den Verlauf der Wange für den Eckzahn, lassen sich dann Formen und Größen aller anderen Zähne bestimmen.

Der Erfinder hat auch festgestellt, dass man aus dem Gesicht die jeweils stärker aufgestellte Seite eines Patienten erkennen kann, mit der daraus resultierenden Tatsache, dass das Gebiss auf der stärker aufgestellten Seite im allgemeinen harmonischer ist, während auf der schwächer aufgestellten Seite die Zähne nicht so gleichmäßig sind.

Erfindungsgemäß wird deshalb zur Rekonstruktion der stärker aufgestellten Seite des Patienten der Abstand der Bipupillarlinie zur Mundwinkellinie bestimmt, wobei die Seite, die eine größere Länge ergibt, als harmonische Seite festgelegt wird.

Bei Berücksichtigung dieser Tatsache werden die künstlichen Zähne bzw. das künstliche Gebiss noch stärker an die Originalzähne bzw. das Originalgebiss angepasst.

Vorteilhafte Weiterbildungen und Ausgestaltungen ergeben sich aus den Unteransprüchen und aus dem nachfolgend anhand der Zeichnung prinzipmäßig beschriebenen Ausführungsbeispiel.

Es zeigt:
- Fig. 1: in Strichdarstellung das Gesicht eines Patienten in Frontalansicht;
- Fig. 2: zwei Frontzähne des Patienten aus dem Oberkiefer;
- Fig. 3: eine weitere Darstellung des Gesichts des Patienten gemäß Fig. 1;
- Fig. 4: das Gesicht des Patienten mit Rekonstruktion eines der beiden seitlichen Schneidezähne;
- Fig. 5: Ansicht der beiden Frontzähne und der beiden seitlichen Schneidezähne;
- Fig. 6: das Gesicht des Patienten mit Rekonstruktion eines Eckzahns;
- Fig. 7: Ansicht des oberen Gebisses mit den Frontzähnen, den beiden Schneidezähnen und den beiden Eckzähnen; und
- Fig. 8: das Gesicht des Patienten mit der Bipupillarlinie und der Mundwinkellinie.

Zur Vereinfachung und zur besseren Darstellung ist das Gesicht des Patienten in den Figuren in Form einer Strichzeichnung dargestellt. In der Praxis wird zur Rekonstruktion der Zähne hierfür eine Aufnahme des Patienten mit geschlossenem Mund hergestellt. Die Aufnahme kann auf beliebige Weise erfolgen, z. B. in digitaler Form, wodurch die Möglichkeit besteht, verschiedene Ausgestaltungen und Rekonstruktionen der Zähne in Verbindung mit der fotografischen Abbildung darzustellen. Ebenso ist eine Bildbearbeitung auf diese Weise und eine Übernahme in einen Computer möglich. Auf diese Weise können die nachfolgend durchgeführten Maßnahmen zur Vermessung des Gesichtes des Patienten für eine Rekonstruktion der Zähne auch über ein Computerprogramm mit einer entsprechenden Software erfolgen.

Bei dem nachfolgenden Ausführungsbeispiel wird die Rekonstruktion der beiden Frontzähne 1, der beiden Schneidezähne 2 und der beiden Eckzähne 3 des Oberkiefers beschrieben. Im allgemeinen ist eine möglichst getreue Rekonstruktion der Zähne des Oberkiefers für die Gesichtsform des Patienten wichtig.

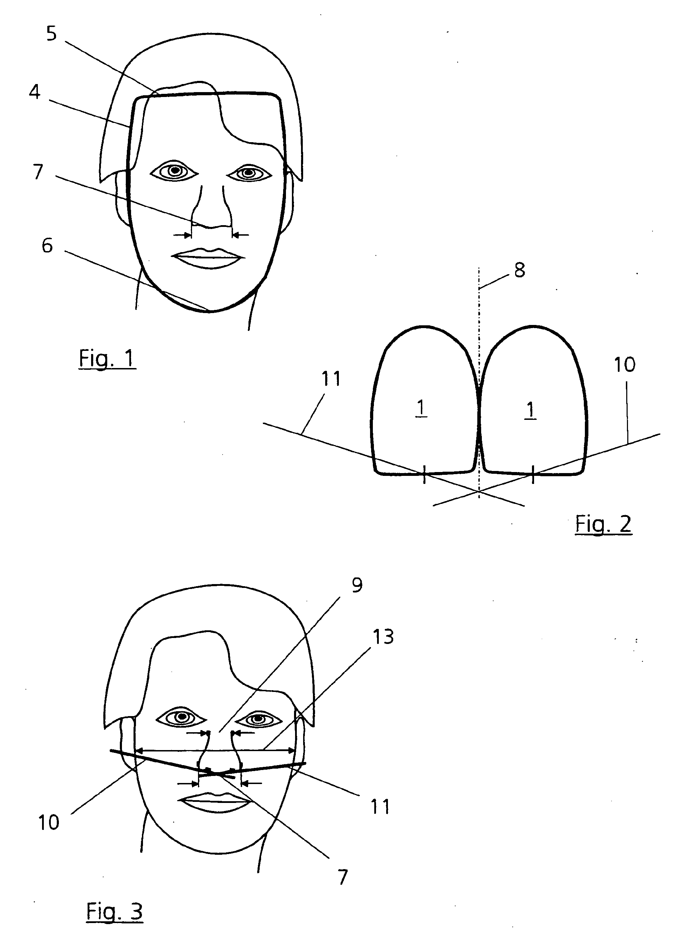

Gemäß Fig. 1 werden die Umrisse 4 des Gesichts des Patienten ermittelt. Dabei stellt die Stirn des Patienten die Oberseite des Frontzahnes 1 mit der Schneidekante dar und zwar ein Übergang 5 zwischen der Stirn zu dem sich daran anschließenden Schädelbogen. Das Kinn 6 stellt den Zahnhals dar.

Zur Bestimmung der Gesamtbreite der Frontzähne 1, der seitlichen Schneidezähne 2 und der Eckzähne 3 wird die Breite der Nasenbasis 7 des Patienten ermittelt. Dies erfolgt jedoch nicht anhand der bildlichen Darstellung, sondern direkt an dem Gesicht des Patienten, um die Originalbreite zu erhalten. Die Originalbreite der Nasenbasis 7 entspricht der Gesamtbreite der sechs Zähne von Eckzahnspitze zu Eckzahnspitze. Mit dieser ermittelten Gesamtbreite lässt sich dann in Kenntnis der einzelnen Zahnbreiten der Zähne zueinander und in Verbindung mit den nachfolgenden Bestimmungen die Breite jedes Zahnes rekonstruieren.

Für die beiden Frontzähne 1 des Oberkiefers wird gemäß Fig. 2 die aus Fig. 1 aus den Gesichtsumrissen erhaltene Form um 180° gedreht, damit die Schneidekante nach unten zeigt. In einfacher Weise kann die erhaltene Form des einen Frontzahnes durch eine Spiegelung an einer vertikalen Linie 8 kopiert werden. Auf diese Weise erhält man eine Rekonstruktion auch des zweiten Frontzahns 1.

Die Rekonstruktion der beiden seitlichen Schneidezähne 2 wird aus den Figuren 2 bis 6 ersichtlich.

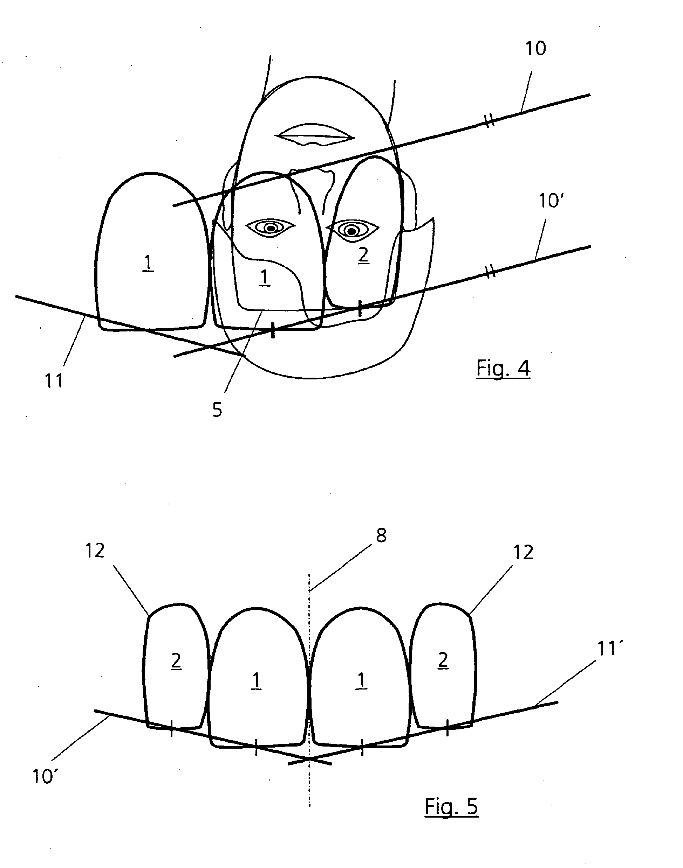

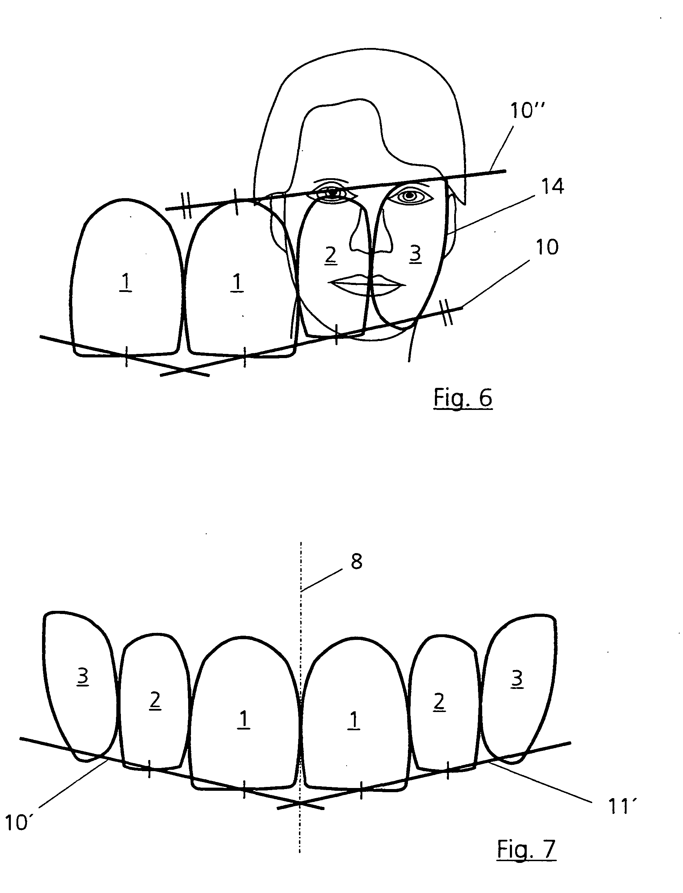

Gemäß Fig. 3 wird die Breite der Nasenbasis 7 und die Breite der Nasenwurzel 9 anhand der bildlichen Aufnahme (hier der Strichzeichnung) vermessen. Gleichzeitig werden zwei Winkellinien 10 und 11 erstellt, die das untere Ende der Nase definieren und zwar den Verlauf von der Nasenmitte über die beiden seitlichen Nasenflügel. Die erhaltenen entsprechend verlängerten Winkellinien 10 und 11 geben den Verlauf der Schneidekanten 12 der Frontzähne 1, der Schneidezähne 2 und der Eckzähne 3 wieder. Die Übertragung der beiden Winkellinien 10 und 11 zur Rekonstruktion dieser Schneidekanten ist insbesondere aus den Figuren 5 und 7 ersichtlich. Für eine detailliertere und damit genauere Übernahme hat sich herausgestellt, dass es hierfür günstiger ist, wenn die dazu verwendete Abbildung größer, vorzugsweise doppelt so groß, ist wie die vorstehend aufgezeigte und zur Vermessung verwendete fotografische Abbildung. Die Winkellinien 10' und 11' verlaufen dabei durch die Kreuzungspunkte der jeweiligen Mittellinien der Zähne an den Schneidekanten.

Die Breite des Schneidezahns 2 wird auf folgende Weise rekonstruiert. Der aus Fig. 3 erhaltene Breitenwert der Nasenbasis 7 wird durch den Breitenwert der Nasenwurzel 9 geteilt. Gleichzeitig wird die gesamte Gesichtsbreite in der Fig. 3 entsprechend der Linie 13 ermittelt. Der Quotient aus dem Ergebnis der Teilung Nasenbasis:Nasenwurzel wird als Teiler für den Wert der gesamten Gesichtsbreite gemäß Bild eingesetzt. Das auf diese Weise erhaltene Ergebnis entspricht der Breite des zu rekonstruierenden Schneidezahns 2 im Verhältnis zu dem Frontzahn 1.

Beispiel: Breite der Nasenbasis gemäß Foto 20,5 mm, der Nasenwurzel 14 mm und der gesamten Gesichtsbreite gemäß Foto 52 mm.
Nasenbasis (20,5) : Nasenwurzel (14) = 1,46.
Gesamte Gesichtsbreite (52) : 1,46 = 35,6.

Dies bedeutet, das Breitenverhältnis des Frontzahnes 1 zu dem Schneidezahn 2 beträgt 52 : 35,6.

Die Außenform des Schneidezahns 2 wird durch die Kontur des Gesichtes aus der zweiten Aufnahme (von der gleichen Seite) festgelegt. Die Innenform des Schneidezahns 2 wird frei angepasst.

Die Fig. 5 zeigt die Vorderansicht der beiden Frontzähne 1 mit den beiden Schneidezähnen 2, wobei - falls erforderlich - Spiegelungen zum Kopieren an der vertikalen Linie 8 vorgenommen werden.

Aus der Fig. 6 wird die Rekonstruktion eines Eckzahnes 3 ersichtlich. Die jeweils zur Gesichtsaußenseite gerichtete Außenform 14 des Eckzahnes 3 entspricht beim linken Eckzahn dem Verlauf der linken Wangenform. Der Verlauf der Außenform des rechten Eckzahns entspricht in gleicher Weise dem Verlauf der rechten Wangenform, sofern der rechte Eckzahn nicht an der vertikalen Linie 8 durch Spiegelung des linken Eckzahns rekonstruiert wird (siehe Fig. 7).

Die Höhe bzw. Länge des Eckzahns 3 wird auf folgende Weise bestimmt: Die Winkellinie 10 wird parallel verschoben und als Tangente 10" an die Mittellinie des Frontzahnes 1 im Schnittpunkt zur Schneidekante angelegt. Anschließend wird die bildliche Aufnahme so "verschoben", dass die Tangente 10" beim rechten Eckzahn 3 durch die rechte Augenbraue verläuft.

Ebenso wie für den Verlauf der Schneidekante 12 hat sich für den Verlauf der Außenform 14 des Eckzahnes 3 in der Praxis herausgestellt, dass im Vergleich zu den für die Rekonstruktion verwendeten Darstellungen gemäß den Figuren 1 und 3 größere Darstellungen bzw. Abbildungen von Vorteil sind, um eine höhere Detailgenauigkeit zu erreichen.

Da die Breite eines Eckzahnes 3 im allgemeinen 80 % von frontal gesehen der Breite eines Schneidezahnes 2 beträgt, lässt sich auch die Breite des Eckzahnes 3 rekonstruieren.

Da im allgemeinen jeder Mensch eine "starke" und eine "schwache" Seite hat, welche sich auch in dem menschlichen Gebiss widerspiegelt, sollte bei einer Rekonstruktion auch dieser Umstand berücksichtigt werden.

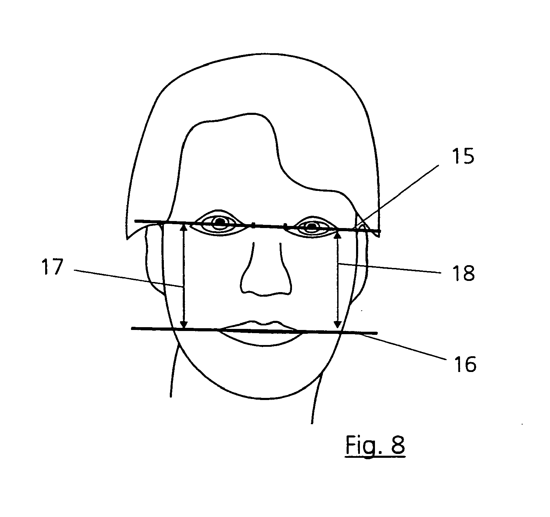

Die Ermittlung der stärker aufgestellten Seite des Patienten wird aus der Fig. 8 ersichtlich. Hierzu wird eine sogenannte Bipupillarlinie 15 zwischen die beiden Augen und eine Mundwinkellinie 16 durch den geschlossenen Mund des Patienten gezogen. Die beiden Linien, nämlich die Bipupillarlinie 15 und die Mundwinkellinie 16 sind im allgemeinen nicht exakt horizontal bzw. parallel zueinander. Misst man die Abstände 17 und 18 zu beiden Seiten der Nase im äußeren Bereich des Gesichts, so wird man feststellen, dass im allgemeinen eine Abstandslinie länger ist als die andere. Bei dem darstellten Ausführungsbeispiel ist die Abstandslinie 17 etwas länger als die Abstandslinie 18. Dies bedeutet, da es sich dabei um die rechte Seite des Patienten handelt und damit die rechte Seite des Gebisses stärker aufgestellt werden sollte.

In Kenntnis dieses Umstandes kann dann die rechte Seite des Gebisses als harmonische Seite festgelegt werden.

## Patentansprüche

1. Verfahren zur Rekonstruktion fehlender, zerstörter und/oder abradierter Zähne mittels Gesichtsanalyse, wobei zur Bestimmung der Formen und Größen der Zähne am Gesicht eines Patienten, für den die Zähne vorgesehen sind, folgende Arbeitsschritte vorgenommen werden:
a) Vermessen der Originalbreite der Nasenbasis (7) am Gesicht, und
b) Rekonstruieren des Abstandes der Spitzen der beiden Eckzähne (3) des Patienten voneinander durch die ermittelte Originalbreite der Nasenbasis (7), entsprechend der Gesamtbreite der sechs Zähne von Eckzahnspitze zu Eckzahnspitze, wobei der ermittelte Wert für die Ermittlung der Breiten der anderen Zähne in folgenden weiteren Schritten vorgesehen wird:
c) Anfertigen von ein oder mehreren bildlichen Aufnahmen des Gesichtes,
d) Drehen der wenigstens einen bildlichen Aufnahme um 180° mit nach unten weisender Stirn, um die Schneidekante eines Frontzahnes (1) zu ermitteln und Bestimmen der Form und Größe wenigstens eines mittleren Frontzahnes (1) durch Vermessen der Umrisse der bildlichen Aufnahme des Gesichts von der Stirn über die Wange zum Kinn mittels der bildlichen Aufnahme, wobei die Stirn die Schneidekante des Frontzahnes (1) ergibt,
e) Rekonstruktion des zweiten mittleren Frontzahnes durch Spiegelung des ersten Frontzahns (1) an einer vertikalen Linie.
f) Rekonstruktion der Breite wenigstens einer der beiden seitlichen Schneidezähne (2) durch
a1) Bestimmen der Breiten von Nasenbasis (7) und Nasenwurzel (9) mittels der bildlichen Aufnahme
b1) Teilen der Breite der Nasenbasis (7) durch die Breite der Nasenwurzel (9) und
c1) Teilen des Wertes der gesamten Gesichtsbreite der bildlichen Aufnahme durch den bei der Teilung im zweiten Schritt erhaltenen Quotienten.

2. Verfahren nach Anspruch 1,
**dadurch gekennzeichnet, dass** die Schneidekante durch den Übergang (5) der Stirn zu dem Schädelbogen bestimmt wird.

3. Verfahren nach Anspruch 1,
**gekennzeichnet durch** folgende weitere Schritte zur Rekonstruktion des wenigstens einen zweiten Schneidezahns (2):
a) Bestimmen der beiden seitlich von der Nasenmitte sich erstreckenden Winkellinien (10,11,), die das untere Ende der Nase definieren und
b) paralleles Übertragen auf die Stirn der bildmäßigen Aufnahme zur Ermittlung des Verlaufes der Schneidekante (12) und der Höhe des Schneidezahns (2).

4. Verfahren nach Anspruch 3,
**dadurch gekennzeichnet, dass** zur Rekonstruktion des zweiten seitlichen Schneidezahns (2) eine zweite bildmäßige Aufnahme erstellt wird, die wenigstens annähernd doppelt so groß ist wie die erste Aufnahme, wobei die Winkellinien (10,11) aus der ersten Aufnahme auf die zweite Aufnahme zur Ermittlung des Zahnverlaufs und der Außenform des Schneidezahns (2), die durch die Kontur des Gesichtes der zweiten Aufnahme auf der gleichen Seite festgelegt wird, aufgelegt wird.

5. Verfahren nach einem der Ansprüche 1 bis 4,
**dadurch gekennzeichnet, dass** der zweite seitliche Schneidezahn (2) durch Spiegelung des ersten seitlichen Schneidezahns (1) an einer senkrechten Linie bestimmt wird.

6. Verfahren nach Anspruch 1,
**dadurch gekennzeichnet, dass** die Breite eines Eckzahnes (3) aus 80 % des Breitenwertes des zweiten Seitenzahnes (2) von frontal gesehen rekonstruiert wird.

7. Verfahren nach Anspruch 1,
**dadurch gekennzeichnet, dass** die seitliche Außenform des Eckzahnes (3) rekonstruiert wird durch Bestimmen des Verlaufes der auf der gleichen Gesichtshälfte sich befindenden Wange (14), wobei die Begrenzung nach oben, die die Zahnhöhe bestimmt, durch die auf der gleichen Seite sich befindende Augenbraue erfolgt.

8. Verfahren nach Anspruch 7,
**dadurch gekennzeichnet, dass** der zweite Eckzahn (3) durch Spiegelung des ersten Eckzahns (3) an einer vertikalen Linie bestimmt wird.

9. Verfahren nach einem der Ansprüche 1 bis 8,
**dadurch gekennzeichnet, dass** zur Rekonstruktion der stärker aufgestellten Seite des Patienten der Abstand der Bipupillarlinie (15) zur Mundwinkellinie (16) bestimmt wird, wobei die Seite, die eine größere Länge ergibt, als harmonische Seite festgelegt wird.

## Claims

1. A method for reconstructing missing, ruined and/or abraded teeth by means of facial analysis, wherein for determining the shapes and sizes of the teeth the following operating steps are carried out on the face of a patient for whom the teeth are intended:
a) measuring the original width of the base of the nose (7) on the face, and
b) reconstructing the distance between the tips of the two canine teeth (3) of the patient by the ascertained original width of the base of the nose (7), corresponding to the overall width of the six teeth from canine tip to canine tip, the value ascertained being intended for ascertaining the widths of the other teeth in the following further steps:
c) taking of one or more image records of the face,
d) turning the at least one image record by 180° with the forehead pointing downwards in order to ascertain the cutting edge of a front tooth (1), and determining the shape and size of at least one middle front tooth (1) by measuring the contours of the image record of the face from the forehead via the cheek to the chain by means of the image record, the forehead yielding the cutting edge of the front tooth (1),
e) reconstructing the second middle front tooth by mirroring the first front tooth (1) on a vertical line,
f) reconstructing the width of at least once of the two lateral incisors (2) by
a1) determining the widths of the base of the nose (7) and the root of the nose (9) by means of the image record,
b1) dividing the width of the base of the nose (7) by the width of the root of the nose (9), and
c1) dividing the value of the overall facial width of the image record by the quotient obtained by the division in the second step.

2. A method according to Claim 1,
**characterised in that**
the cutting edge is determined by the transition (5) of the forehead to the cranial arch.

3. A method according to Claim 1,
**characterised by** the following further steps for reconstructing the at least one second incisor (2):
a) determining the two angle lines (10, 11) extending laterally from the centre of the nose which define the lower end of the nose, and
b) parallel transferring to the forehead of the image record for ascertaining the path of the cutting edge (12) and the height of the incisor (2).

4. A method according to Claim 3,
**characterised in that**
for reconstructing the second lateral incisor (2), a second image record is produced which is at least approximately twice as large as the first record, the angle lines (10, 11) from the first record being laid on the second record for ascertaining the tooth profile and the external shape of the incisor (2) which is fixed by the contour of the face of the second record on the same side.

5. A method according to one of Claims 1 to 4, **characterised in that** the second lateral incisor (2) is determined by mirroring the first lateral incisor (1) on a vertical line.

6. A method according to Claim 1,
**characterised in that**
the width of a caning tooth (3) is reconstructed from 80% of the value of the width of the second side tooth (2) in a frontal view.

7. A method according to Claim 1,
**characterised in that**
the lateral external shape of the canine tooth (3) is reconstructed by determining the profile of the cheek (14) which is on the same half of the face, the limitation upwards which determines the tooth height being produced by the eyebrow on the same side.

8. A method according to Claim 7,
**characterised in that**
the second canine tooth (3) is determined by mirroring the first canine tooth (3) on a vertical line.

9. A method according to one of Claims 1 to 8,
**characterised in that**
the distance of the bipupillar line (15) from the mouth corner line (16) is determined for reconstructing the more strongly set-up side of the patient, the side which yields a greater length being fixed as the harmonic side.

## Revendications

1. Procédé de reconstruction de dents perdues, de dents abîmées et/ou de dents érodées, au moyen d'une analyse du visage, dans lequel, en vue de déterminer la forme et la taille des dents, on effectue les démarches opérationnelles suivantes sur le visage d'un patient pour lequel les dents sont prévues :
a) mesure de la largeur originale de la base du nez (7) sur le visage, et
b) reconstruction de l'écart entre les pointes des deux canines (3) du patient par la largeur originale déterminée de la base du nez (7) du patient, correspondant à la largeur totale des six dents entre la pointe d'une des canines jusqu'à la pointe de l'autre canine, la détermination de la mesure de la largeur des autres dents prévoit les étapes complémentaires suivantes:
c) préparation d'une ou plusieurs prises de vues photographiques du visage,
d) rotation d'au moins une des prises de vues photographiques de 180° pour positionner le front vers le bas, en vue de déterminer la ligne frontale de coupe d'une incisive (1) et déterminer la forme et la taille d'au moins une incisive centrale (1) par la mesure des contours de la photographie du visage depuis le front, par-dessus la joue et jusqu'au menton, au moyen de la photographie, la ligne de coupe de l'incisive (1) étant définie par le front,
e) reconstruction de la deuxième incisive centrale par symétrie-miroir de la première incisive (1) par rapport à une ligne verticale,
f) reconstruction de la largeur d'au moins une des deux incisives latérales (2) par
a1) détermination de la largeur de la base du nez (7) et la racine du nez (9) au moyen des prises de vues photographiques
b1) division de la valeur de la largeur de la base du nez (7) par la largeur de la racine du nez (9) et
c1) division de la valeur de la largeur totale du visage selon la vue phonographique par le quotient obtenu au cours de la deuxième démarche opérationnelle.

2. Procédé selon la revendication 1,
**caractérisé en ce que**,
la ligne de coupe est déterminée par le passage (5) du front vers la courbure du crâne.

3. Procédé selon la revendication 1,
**caractérisé par** les étapes complémentaires suivantes pour la reconstruction d'au moins une des deux incisives (2) :
a) détermination des deux lignes inclinées (10, 11) s'étendant latéralement depuis le milieu du nez et définissant l'extrémité inférieure du nez et
b) transmission en parallèle sur le front de la vue phonographique, pour la détermination de la ligne de coupe (12) et la hauteur des incisives (2).

4. Procédé selon la revendication 3,
**caractérisé en ce que**,
pour la reconstruction des deux incisives latérales (2) on effectue une deuxième prise de vue phonographique qui est au moins deux fois plus grande que la première prise de vue photographique, **en ce que** les lignes inclinée (10, 11) sont transposées de la première prise de vue photographique sur la deuxième prise de vue photographique, qui est placée au niveau du contour du visage de la deuxième prise de vue du même coté, pour déterminer l'orientation et le contour externe des incisives (2).

5. Procédé selon une des revendications 1à 4,
**caractérisé en ce que**,
la deuxième incisive latérale (2) est définie par symétrie-miroir selon une ligne verticale, à partir de la première incisive (1).

6. Procédé selon la revendication 1,
**caractérisé en ce que**,
la largeur d'une canine (3) est déterminée sur la base de 80% de la valeur de la largeur, vue frontalement, de la deuxième incisive (2).

7. Procédé selon la revendication 1,
**caractérisé on ce que**,
la forme extérieure latérale de la canine (3) est reconstruite par la détermination du profil de la joue (14) se trouvant sur la même prise de vue phonographique, la limitation vers le haut qui détermine la hauteur des dents, se faisant par les sourcils disposés du même coté.

8. Procédé selon la revendication 7,
**caractérisé en ce que**,
la deuxième canine (3) est obtenus par symétrie-miroir de la première canine par rapport à une ligne verticale.

9. Procédé selon l'une des revendications 1 à 8,
**caractérisé en ce que**,
pour la reconstruction du coté fort du patient, on détermine la distance de la ligne bi-pupillaire (15) par rapport à la ligne inclinée de la bouche (16), le coté qui donne une longueur supérieure étant défini comme le coté harmonieux.
